**Europäisches Patentamt**

**European Patent Office**

**Office européen des brevets**

(11) Veröffentlichungsnummer: **0 162 398
B1**

# EUROPÄISCHE PATENTSCHRIFT

(45) Veröffentlichungstag der Patentschrift:
**11.05.88**

(21) Anmeldenummer: **85105874.3**

(22) Anmeldetag: **13.05.85**

(51) Int. Cl.⁴: **G 01 M  15/00,** G 01 L  3/22

(54) Verfahren und Vorrichtung zum Bestimmen des Drehmoments eines Drehmomenterzeugers.

(30) Priorität: **18.05.84  DE 3418617**

(43) Veröffentlichungstag der Anmeldung:
**27.11.85 Patentblatt 85/48**

(45) Bekanntmachung des Hinweises auf die Patenterteilung:
**11.05.88 Patentblatt 88/19**

(84) Benannte Vertragsstaaten:
**AT DE FR GB IT SE**

(56) Entgegenhaltungen:
**EP - A - 0 098 570
DE - A - 2 448 838
US - A - 3 667 290
US - A - 4 036 049**

**PATENTS ABSTRACTS OF JAPAN, Band 5, Nr. 173
(P-87)(845), 5. November 1981, Selte 111 P 87, Tokyo,
JP; & JP - A - 56 101 531 (HITACHI SEISAKUSHO K.K.)
14.08.1981
IBM TECHNICAL DISCLOSURE BULLETIN, Band 26, Nr.
7A, Dezember 1983, Seiten 3475-3476, New York, US;
R.L. LINTON: "Inertia, damping and load measuring
device"**

(73) Patentinhaber: **Siemens Aktiengesellschaft Berlin und
München, Wittelsbacherplatz 2, D-8000 München 2 (DE)**

(72) Erfinder: **Blaschke, Felix, Dr., Steinforstrasse 19,
D-8520 Erlangen (DE)**

## Beschreibung

Die Erfindung betrifft ein Verfahren zum Bestimmen des Drehmoments eines Drehmomenterzeugers gemäss dem Oberbegriff des Anspruchs 1. Die Erfindung betrifft ferner die Anwendung des Verfahrens und eine Vorrichtung zur Durchführung des Verfahrens.

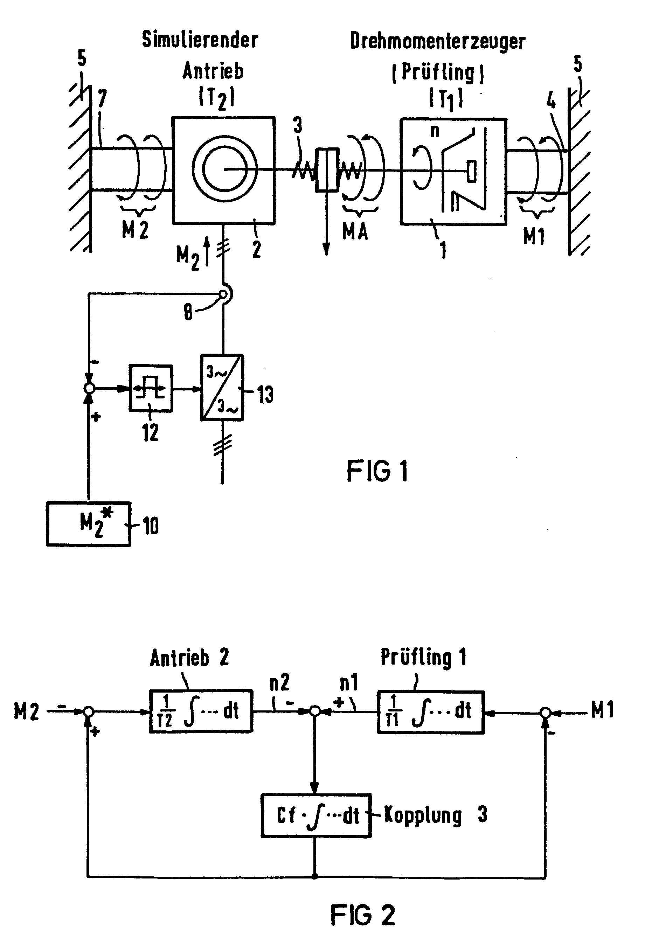

In der deutschen Offenlegungsschrift 32 25 035 (entspricht EP-A2-0 098 570) ist eine Vorrichtung zum Prüfen eines Drehmomenterzeugers beschrieben, die es gestattet, die Brennkraftmaschine eines Fahrzeugs unter den verschiedensten Fahrbedingungen zu prüfen, indem die Brennkraftmaschine («Drehmomenterzeuger» 1) über ihre Welle 3 kraftschlüssig mit der Welle eines elektrischen Antriebs 2 verbunden ist (Fig. 1). Das durch die Verbrennungsvorgänge in der Maschine erzeugte «innere» Drehmoment M1 tritt als Torsionsmoment in den Halterungen 4 auf, die den Motor mit den Fundamenten 5 des Prüfstandes verbinden (Fig. 1). Der elektrische Antrieb, z.B. eine von einem Umrichter 13 mit variabler Frequenz gespeiste Drehfeldmaschine, der über einen Sollwert 10 und einen Steuersatz 12 ein bestimmtes elektrisches Moment M2 vorgegeben ist, überträgt über ihre Halterung 7 dieses Moment M2 ebenfalls auf die Fundamente des Prüfstandes. Der elektrische Antrieb ist nun in der Lage, durch Veränderung seines elektrischen Momentes die bei verschiedenen Betriebszuständen des Fahrzeuges auftretenden, auf die Brennkraftmaschine wirkende Lastmomente zu simulieren. Für die Untersuchung des Betriebsverhaltens der Brennkraftmaschine ist aber nicht das vom Antrieb aufgebrachte Moment selbst von Interesse, vielmehr das über die Welle 3 zwischen der Maschine und dem simulierenden Antrieb ausgetauschte äussere Drehmoment («Austauschmoment» MA). Dieses Austauschmoment kann durch eine Messwelle erfasst werden, die zwischen der Maschine und dem Antrieb angeordnet ist. Die Kopplung zwischen Maschine und Antrieb ist dann nicht vollkommen starr, sondern beschränkt torsionsfähig und ist in Figur 1 daher als eine Feder mit der Federkonstanten Cf dargestellt. Mit T1 ist das Trägheitsmoment der Maschine, mit T2 das Trägheitsmoment des elektrischen Antriebs bezeichnet.

Für die exakte Simulierung von Betriebszuständen ist die Kenntnis des inneren Momentes M1 der Brennkraftmaschine erforderlich, das nur dann gleich dem elektrischen Moment des Antriebes bzw. dem durch den Antrieb simulierten Lastmoment des Fahrzeugs ist, wenn das Trägheitsmoment T1 der Maschine gegenüber dem Lastmoment T2 vernachlässigbar ist. Im anderen Extremfall, bei dem T2 vernachlässigt werden kann, also praktisch die Antriebswelle der Maschine frei beweglich ist, ist das innere Moment M1 praktisch vollständig in die Drehbeschleunigung des Maschinen-Trägheitsmomentes T1 umgesetzt. Im allgemeinen Fall dagegen gilt:

$$MA = \{M1 \cdot T2/(T1 + T2) + M2 \cdot T1/(T1 + T2)\} \quad (1)$$

bzw. bei Berücksichtigung der Federkonstanten Cf, also in dem Fall, dass die kraftschlüssige Verbindung zwischen Maschine und Last (Fahrzeug bzw. Antrieb) elastisch ist:

$$MA = \{M1 \cdot T2/(T1 + T2) + M2 \cdot T1/(T1 + T2)\}/(1 + s^2 T^2) \quad (2)$$

mit der Laplace-Variablen s und der Zeitkonstanten

$$T = \sqrt{\frac{T1 \cdot T2}{(T1 + T2) \cdot Cf}}$$

In Figur 2 ist das Strukturbild des Prüfstandes nach Fig. 1 angegeben, das zu diesem funktionalen Zusammenhang zwischen M1, M2, MA und den Trägheitsmomenten T1 und T2 sowie zu den Drehzahlen n1 und n2 des Prüflings und des Antriebs führt.

Ähnliche Verhältnisse liegen vor, wenn der Prüfling nicht eine Brennkraftmaschine, sondern z.B. eine (elektrische oder mechanische) Bremse und/oder eine Kupplung ist.

Der Erfindung liegt daher die Aufgabe zugrunde, das Drehmoment eines derartigen Drehmomenterzeugers auf möglichst einfache Art zu bestimmen.

Diese Aufgabe wird erfindungsgemäss gelöst durch ein Verfahren mit den Merkmalen des Anspruchs 1, eine Verwendung des Verfahrens mit den Merkmalen des Anspruchs 6 bzw. eine Vorrichtung mit den Merkmalen des Anspruchs 7. Vorteilhafte Weiterbildungen sind in den Unteransprüchen angegeben.

Demnach wird aus dem vorgegebenen Moment M2, dem Messwert MA des Austauschmoments und einem Trägheitsmomenten-Parameter ein Modell M* für das innere Drehmoment bestimmt. Dieser Modellwert ergibt sich entsprechend dem funktionalen Zusammenhang (1) zwischen den bekannten Werten M2 und MA und dem (an sich unbekannten) Trägheits-Parameter (T1/T2)

$$M1 = MA(1 + s^2 T^2) \cdot (T1 + T2)/T2 - M2 \cdot (T1/T2), \quad (3)$$

durch Vorgabe eines zunächst geschätzten Trägheitsmomenten-Parameters (T1/T2)* zu:

$$M* = MA(1 + s^2 T^{*2}) \cdot \{1 + (T1/T2)*\} - M2(T1/T2)*. \quad (4)$$

Vernachlässigt man zunächst die Abweichung der geschätzten Zeitkonstante T*, für die gilt

$$T* = \sqrt{\frac{(T1/Cf)*}{1 + (T1/T2)*}}$$

so ergibt sich aus den Beziehungen (1) und (4), dass für den Modellwert gilt:

$$M* = M2 \frac{T1}{T2} \cdot \frac{1 + (T1/T2)*}{1 + (T1/T2)} +$$

$$+ M1 \cdot \frac{1 + (T1/T2)*}{1 + (T1/T2)} - M2 \cdot (T1/T2)* \quad (5)$$

Wenn also der Trägheitsmoment (T1/T2)* mit dem tatsächlichen Trägheitsmomentenverhältnis T1/T2 übereinstimmt, dann ist das innere Moment M1 der Maschine tatsächlich gleich dem Modellwert M*, der Modellwert kann daher als Messwert des inneren Drehmomentes der Maschine abgegriffen werden, sofern lediglich der Trägheitsmomenten-Parameter auf das tatsächliche Trägheitsmomentenverhältnis abgeglichen wird.

Dieser Abgleich wird gemäss der Erfindung dadurch vorgenommen, dass durch Variation des elektrischen Momentes M2 der Trägheitsmomenten-Parameter auf eine minimale Abhängigkeit des Modellwertes von der Variation des elektrischen Momentes justiert wird.

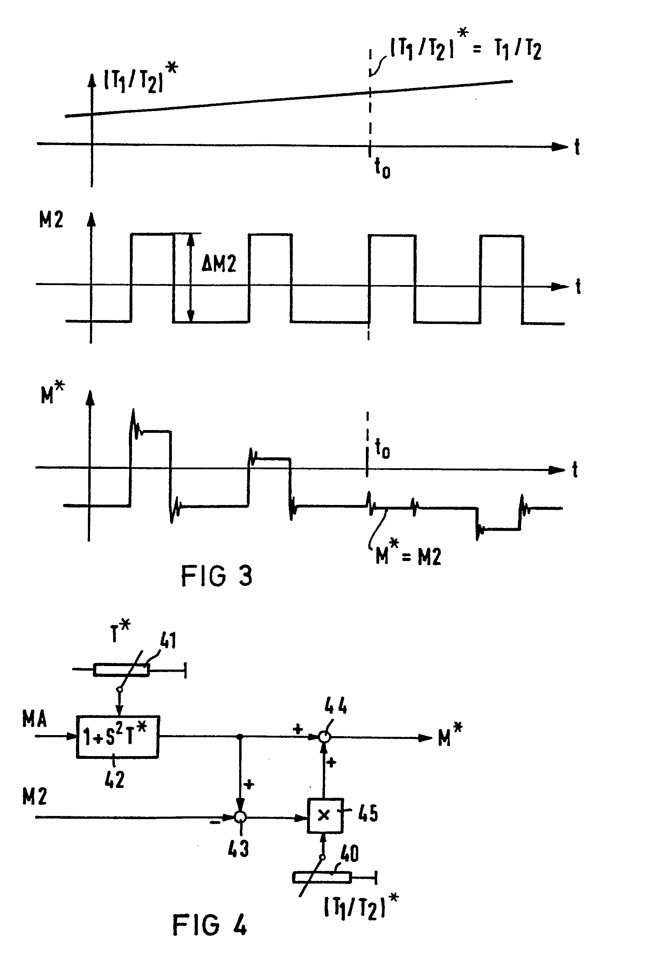

Lässt man insbesondere den Arbeitspunkt des Drehmomenterzeugers praktisch konstant, z.B. indem man insbesondere beim Prüfen einer Brennkraftmaschine die Zündung ausschaltet oder die Maschine nur im Leerlauf betreibt, so ist das tatsächliche, nur von Reibungsverlusten bestimmte Drehmoment M1 praktisch konstant. Jede vorgegebene Änderung $\Delta M2$ von M2 bewirkt dann nur eine Änderung des Messwertes MA. Dagegen ergibt sich nach (5) eine Änderung von M*, solange der Trägheitsmomenten-Parameter nicht abgeglichen ist. Figur 3 betrifft den Fall, dass dem elektrischen Antrieb bei im übrigen konstantem Sollwert eine Kette von Zusatzimpulsen $\Delta M2$ aufgeschaltet wird, während der Parameter (T1/T2)* linear mit der Zeit verändert wird. Dabei ergibt sich der dargestellte Verlauf für den Modellwert M*, dessen durch $\Delta M2$ hervorgerufene Oszillation zum Zeitpunkt t0 verschwinden, zu dem der linear veränderte Trägheitsmomenten-Parameter gerade den den tatsächlichen Verhältnissen entsprechenden Wert angibt.

Anhand eines Ausführungsbeispieles und dreier weiterer Figuren ist die Erfindung näher erläutert.

Figur 4 zeigt ein Rechenwerk zur Bildung des Modellwertes M* aus dem Messwert des Austauschmomentes MA, dem elektrischen Moment M2 des Antriebs, sowie dem an einer Justiereinrichtung 40 eingestellten Trägheitsmomenten-Parameter (T1/T2)* und der an einer weiteren Justiereinrichtung 41 eingestellten Zeitkonstanten T*.

Der Messwert MA des das Austauschmoment erfassenden Drehmomentaufnehmers ist zunächst über ein Zeitglied 42 (Zeitkonstante T*) geführt. Das Übertragungsverhalten dieses Zeitgliedes ist mit der Übertragungsfunktion $(1 + s^2 T^{*2})$ bei abgeglichener Zeitkonstanten $(T^* = T)$ invers zu dem Schwingungsverhalten der kraftschlüssigen Kopplung zwischen der Maschine und dem Antrieb. Die Ausgangsgrösse dieses Zeitgliedes ist zwei Additionsstellen 43 und 44 zugeführt, wobei das erste Additionsglied 43 der Bildung von $MA \cdot (1 + s^2 T^{*2})$ −M2 dient. Dessen Ausgangssignal ist an einem Multiplizierer 45 mit dem an der Justiervorrichtung (Potentiometer 40) abgegriffenen Parameter (T1/T2)* multipliziert und anschliessend ebenfalls dem zweiten Additionsglied 44 aufgeschaltet, an dessen Ausgang der Modellwert M* abgegriffen ist.

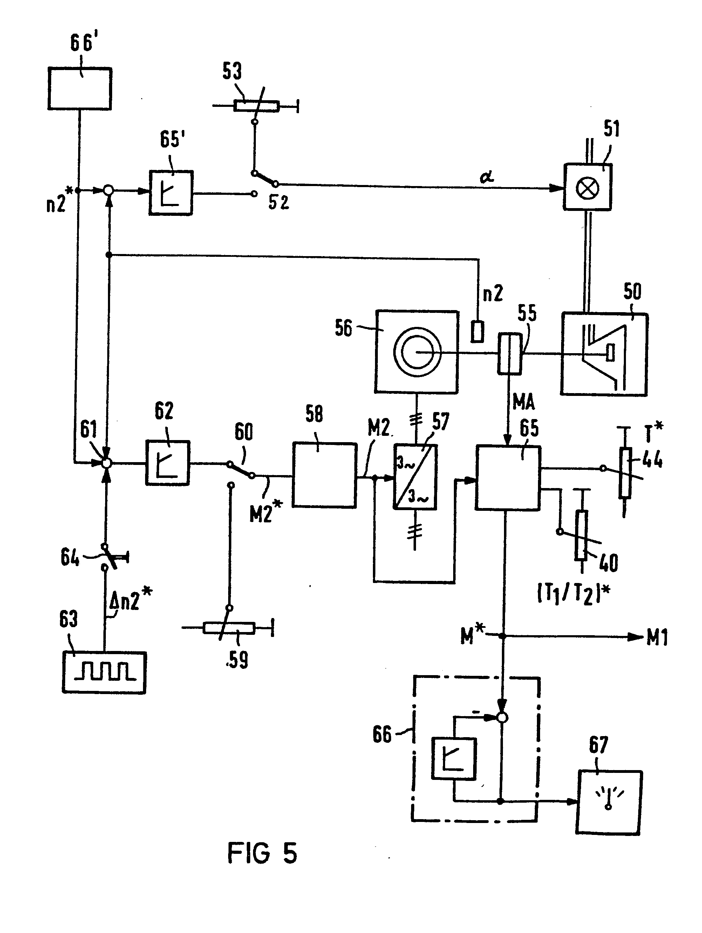

Figur 5 zeigt einen vollständigen Prüfstand zur Prüfung einer Brennkraftmaschine. Die Brennkraftmaschine 50 wird über einen dem Vergaser 51 vorgeschalteten Umschalter 52 mit einem der Stellung des Gaspedals entsprechenden Steuersignal $\alpha$ gesteuert, das bei der in Figur 5 gezeigten Stellung des Umschalters 52, die für die Justierung des Parameters (T1/T2)* vorgesehen ist, von einem Potentiometer 53 eingestellt wird und den Arbeitspunkt der Brennkraftmaschine festlegt. Vorzugsweise ist dabei dieses die Zündung der Brennkraftmaschine festlegende Steuersignal entsprechend dem Leerlauf der Maschine gewählt oder es dient zur gänzlichen Abschaltung der Zündung. Das innere Moment der Maschine ist dann allein durch Reibungsverluste bedingt.

Die Messwelle 55 verbindet die Welle der Maschine 50 mit der Welle des Antriebs 56 und liefert den Wert MA. Dem Antrieb 56 wird über die Steuerung 58 seiner Stromeinspeisung 57 ein Sollwert M2* der elektrischen Leistung vorgegeben. Für die Simulation des Betriebsverhaltens der Maschine kann M2* auf die in der erwähnten deutschen Offenlegungsschrift 32 25 035 beschriebene Weise vorgegeben werden. In Fig. 5 dient das Potentiometer 59 dazu, einen zur Simulation eines bestimmten Lastzustandes dienenden Sollwert einzustellen. Ein Umschalter 60 ermöglicht es hierbei, für die Justierung der Parameter (T1/T2)* und T* das elektrische Drehmoment entsprechend dem Ausgang eines Drehzahlreglers 61 vorzugeben, der die Drehzahl (und damit den Betriebspunkt der leerlaufenden Maschine) auf einen konstanten Sollwert n2* hält und dessen Soll/Istwert-Eingang 62 ein Zusatzimpuls $\Delta n2^*$ zur Variation des elektrischen Drehmomentes aufgeschaltet werden kann. Dieser Zusatzimpuls wird von einem Impulsgenerator 63 erzeugt, der über einen Freigabe-Taster 64 freigebbar ist.

Neben dieser in der Figur gezeigten Schalterstellung wird durch Umlegen der Umschalter ein Zustand herbeigeführt, bei dem nunmehr das die Zündung steuernde Gaspedal-Steuersignal $\alpha$ der Brennkraftmaschine von einem Drehzahlregler 65' mit der Drehzahl-Soll/Istwert-Differenz gesteuert wird. Der Sollwert n2* kann dabei von einer Programmsteuerung 66' in Abstimmung mit dem zur Simulation des Lastmomentes vorgegebenen Sollwert M2* entsprechend einem Prüfprogramm eingestellt werden. Das Ausgangssignal MA des Drehmomentaufnehmers 55 wird nun von dem (in Figur 4 gezeigten) Rechenwerk 65 mittels der an den Justiereinrichtungen 40 und 44 abgegriffenen Parameterwerte T* und (T1/T2)* in den Modellwert M* umgerechnet, der dem tatsächlichen Wert M1 bei abgeglichenen Parametern gleich ist und den gesuchten Wert des inneren Drehmomentes der geprüften Maschine in dem simulierten Betriebszustand darstellt.

Die Justierung der Parameter kann bei der Vorrichtung nach Fig. 5 dadurch erfolgen, dass zunächst in einer Einrichtung 66 der Gleichspannungsanteil im Modellwert M* unterdrückt wird. Nach einer geringfügigen Glättung wird der Wechselspannungsanteil des Modellwerts einem Anzeigegerät 67 zugeführt, das dann entsprechend dem Takt des Impulsgenerators 63 Oszillationen um den Nullpunkt aufweist.

Es genügt nun, den Ausschlag des Anzeigegerätes 67 unter Veränderung der Potentiometereinstellung (T1/T2)* zu beobachten und das Potentiometer 40 von Hand auf minimalen Ausschlag abzugleichen. Bei hinreichend niedriger Frequenz der Impulse $\Delta n2^*$ genügt als Anzeigegerät ein Zeigerinstrument, aber es kann natürlich auch ein automatischer Abgleich vorgenommen werden. Anschliessend kann auch der Parameter $T^*$ justiert werden, wobei z.B. bei optischer Beobachtung an einem Oszillographen die Oszillationen, die der Modellwert $M^*$ nach Abgleich des Parameters $(T1/T2)^*$ noch aufweist, durch Veränderung der Einstellung des Potentiometers 44 praktisch zum Verschwinden gebracht werden. Auch dieser Abgleich kann automatisiert werden.

Diese Justierung liefert somit nicht nur die optimale Einstellung, bei der die Rechenstufe zum Messwert MA des Austauschmomentes den richtigen Wert für das innere Drehmoment M1 des Prüflings angibt, sondern die Potentiometereinstellungen gestatten dann auch, das Trägheitsmoment T1 des Prüflings und die Federkonstante Cf der Welle zu ermitteln, was ebenfalls für die Prüfung von Maschinen in derartigen Prüfständen vorteilhaft sein kann.

## Patentansprüche

1. Verfahren zum Bestimmen des Drehmomentes eines Drehmomenterzeugers (50), der an einen elektrischen Antrieb (56) mit vorgegebenem elektrischen Moment (M2) gekoppelt ist und dessen mit dem Antrieb ausgetauschtes Drehmoment (MA) gemessen wird, dadurch gekennzeichnet,

a) dass nach einem funktionalen Zusammenhang, der das innere Drehmoment (M1) des Drehmomenterzeugers als Funktion des elektrischen Momentes (M2), des Austauschmomentes (MA) und der Trägheitsmomente von Drehmomenterzeuger und Antrieb bestimmt, aus dem vorgegebenen elektrischen Moment, dem Messwert des Austauschmomentes und einem Trägheitsmomenten-Parameter $((T1/T2)^*)$ ein Modellwert $(M^*)$ für das innere Drehmoment (M1) bestimmt wird,

b) dass durch Variation $(\Delta n2^*)$ des elektrischen Momentes der Trägheitsmomenten-Parameter $(T1/T2)^*$ auf eine minimale Abhängigkeit des Modellwertes $(M^*)$ von der Variation $(\Delta n2^*)$ des elektrischen Momentes justiert wird, und

c) dass der Modellwert als Wert des inneren Drehmomentes abgegriffen wird.

2. Verfahren nach Anspruch 1, dadurch gekennzeichnet, dass zur Variation des elektrischen Momentes bei praktisch konstantem Arbeitspunkt des Drehmomenterzeugers dem Antrieb ein konstanter Sollwert und impulsartige Zusatzsollwerte aufgeschaltet werden, und dass der Trägheitsmomenten-Parameter verstellt wird, bis der Modellwert sich beim Aufschalten der Zusatzsollwerte praktisch nicht ändert.

3. Verfahren nach Anspruch 1 oder 2, dadurch gekennzeichnet, dass der Messwert des Austauschmomentes über ein Zeitglied mit veränderbarer Zeitkonstante und einem dem Schwingungsverhalten der Kopplung inversen Zeitverhalten an einem Drehmomentaufnehmer abgegriffen ist und dass die Zeitkonstante auf minimales Schwingungsverhalten des Modellwertes justiert wird.

4. Verfahren nach einem der Ansprüche 1 bis 3, dadurch gekennzeichnet, dass der funktionale Zusammenhang zwischen dem Modellwert $(M^*)$, dem Messwert (MA) des Austauschmomentes und dem elektrischen Moment (M2) mit einem das Trägheitsmomentverhältnis von Drehmomenterzeuger und Antrieb entsprechendem Parameter $(T1/T2)^*$ gemäss $M^* = MA (1 + (T1/T2)^*) - M2 (T1/T2)^*$ gebildet wird.

5. Verfahren nach Anspruch 3, dadurch gekennzeichnet, dass der funktionale Zusammenhang zwischen dem Modellwert $(M^*)$, dem Messwert (MA) des Austauschmomentes, dem elektrischen Moment M2, einem Trägheitsmomenten-Parameter $(T1/T2)^*$ und einen Übertragungsfunktion $(1 + s^2 T^{*2})$ mit einer Zeitkonstanten $T^*$ gemäss

$$M^* = MA(1 + s^2 T^{*2}) (1 + (T1/T2)^*) - M2 (T1/T2)^*$$

gebildet wird.

6. Anwendung des Verfahrens nach einem der Ansprüche 1 bis 5 zur Bestimmung des inneren Drehmomentes einer Brennkraftmaschine, wobei die Zündung der Maschine abgeschaltet oder die Maschine im Leerlauf betrieben wird und die Variation des elektrischen Momentes durch Aufschaltung einer Kette von Zusatzimpulsen auf den Drehzahl- oder Drehmomentensollwert des elektrischen Antriebs vorgenommen wird.

7. Vorrichtung zur Bestimmung des inneren Drehmomentes eines Drehmomenterzeugers, mit

a) einem Drehmomenterzeuger (50),

b) einem elektrischen Antrieb (56) zur Erzeugung eines vorgegebenen elektrischen Momentes und

c) einer Drehmomentenkopplung zwischen Antrieb und Erzeuger mit einem Drehmoment-Aufnehmer (55), gekennzeichnet durch

d) ein Rechenwerk (65), das aus dem elektrischen Moment, dem Messwert des Aufnehmers und einem Trägheitsmomenten-Parameter einen Modellwert für das innere Drehmoment berechnet,

e) eine Eingabeeinrichtung (63) zur Aufschaltung eines vorübergehenden Zusatz-Sollwertes zur Erzeugung kurzzeitiger Änderungen des elektrischen Momentes, und

f) Justiermittel (40, 44, 67), die durch Variation des Trägheitsmomenten-Parameters die von Änderungen des elektrischen Momentes hervorgerufenen Änderungen des Modellwertes minimalisieren.

## Claims

1. Process for determining the torque of a torque generator (50), which is coupled to an electrical drive (56) with preset electrical moment (M2) and the torque of which which is exchanged with the drive, is measured, characterised in that

a) according to a functional relationship which determines the internal torque (M1) of the torque generator as a function of the electrical moment (M2), of the exchange moment (MA) and of the moments of inertia of torque generator and drive, a model value (M*) for the internal torque (M1) is determined from the preset electrical moment, the measured value of the exchange moment and a parameter for moments of inertia ((T1/T2)*),

b) by variation ($\Delta$n2*) of the electrical moment the parameter for moments of inertia (T1/T2)* is adjusted to a minimum dependence of the model value (M*) on the variation ($\Delta$n2*) of the electrical moment, and

c) the model value is detected as value of the internal torque.

2. Process according to claim 1, characterised in that for varying the electrical moment with (a) practically constant working point of the torque generator, a constant desired value and pulse-like additional desired values are applied to the drive and that the parameter for moments of inertia is adjusted until the model value practically does not alter when the additional desired values are applied.

3. Process according to claim 1 or 2, characterised in that the measured value of the exchange moment is detected by way of a timer with variable time constant and a time response which is inverse to the vibration response of the coupling on a torque detector, and that the time constant is adjusted to minimal vibration response of the model value.

4. Process according to one of claims 1 to 3, characterised in that the functional relationship is formed between the model value (M*), the measured value (MA) of the exchange moment and the electrical moment (M2) with a parameter (T1/T2)* according to M* = MA (1 + (T1/T2)*) −M2, (T1/T2)* corresponding to the moments of inertia ratio of torque generator and drive.

5. Process according to claim 3, characterised in that the functional relationship is formed between the model value (M*), the measured value (MA) of the exchange moment, the electrical moment M2, a parameter for moments of inertia (T1/T2)* and a transmission function $(1 + s^2 T^{*2})$ with a time constant T* according to

$$M^* = MA(1 + s^2 T^{*2})(1 + (T1/T2)^*) - M2 (T1/T2)^*.$$

6. Application of the process according to one of claims 1 to 5 for determining the internal torque of a fuel-burning engine, in which case the ignition of the engine is disconnected or the engine is run without load and the variation of the electrical moment is undertaken by applying a train of additional pulses to the number of revolutions or torque desired value of the electrical drive.

7. Device for determining the initial torque of a torque generator, having

a) a torque generator (50)

b) an electrical drive (56) for generating a preset electrical moment and

c) a torque coupling between drive and generator with a torque detector (55), characterised by

d) an arithmetic unit (65), which calculates a model value for the internal torque from the electrical moment, the measured value of the detector, and a parameter for moments of inertia,

e) an input arrangement (63) for applying a transitory additional-desired value for generating temporary alterations of the electrical moment, and

f) adjusting means (40, 44, 67), which by variation of the parameter for moments of inertia minimize the alterations of the model value generated by alterations of the electrical moment.

**Revendications**

1. Procédé pour déterminer le couple d'un générateur de couple (50), qui est accouplé à un dispositif d'entraînement électrique (56) présentant un moment électrique prédéterminé (M2) et dont on mesure le couple (MA) simulé par le dispositif d'entraînement, caractérisé par le fait

a) qu'à partir d'une relation fonctionnelle, qui détermine le couple intérieur (M1) du générateur de couple en fonction du moment électrique (M2), du moment de substitution (MA) et des moments d'inertie du générateur de couple et du dispositif d'entraînement, on détermine une valeur modèle (M*) pour le couple intérieur (M1) à partir du moment électrique prédéterminé, de la valeur de mesure du moment de substitution et d'un paramètre (T1/T2)* des moments d'inertie,

b) qu'en modifiant ($\Delta$n2*) le moment électrique, on ajuste le paramètre (T1/T2*) des moments d'inertie pour obtenir une dépendance minimale de la valeur modèle (M*) vis-à-vis de la variation ($\Delta$n2*) du moment électrique, et

c) on prélève la valeur modèle en tant que valeur du couple intérieur.

2. Procédé suivant la revendication 1, caractérisé par le fait que, pour modifier le moment électrique, alors que le point de fonctionnement du générateur de couple est pratiquement constant, on applique au dispositif d'entraînement une valeur de consigne constante et des valeurs de consigne supplémentaires en forme d'impulsions, et qu'on modifie le paramètre des moments d'inertie jusqu'à ce que la valeur de consigne ne varie pratiquement pas lors de l'application des valeurs de consigne supplémentaires.

3. Procédé suivant la revendication 1 ou 2, caractérisé par le fait que la valeur de mesure du moment de substitution est prélevée par l'intermédiaire d'un circuit de temporisation possédant une constante de temps variable et un comportement dans le temps, qui est inverse au comportement oscillatoire du couplage, sur un générateur de couple et qu'on ajoute la constante de temps pour obtenir un comportement oscillatoire minimal de la valeur modèle.

4. Procédé suivant l'une des revendications 1 à 3, caractérisé par le fait qu'on forme la relation fonctionnelle entre la valeur modèle (M*), la valeur de mesure (MA) du moment de substitution et le moment électrique (M2) à l'aide d'un paramètre (T1/T2)*, qui correspond au rapport des moments d'inertie du générateur de couple et du dispositif d'entraînement, conformément à M* = MA (1 + (T1/T2)*) − M2 (T1/T2)*.

5. Procédé suivant la revendication 3, caractérisé par le fait qu'on forme la relation fonctionnelle entre la valeur modèle (M*), la valeur de mesure (MA) du moment de substitution, le moment électrique (M2), un paramètre (T1/T2)* des moments d'inertie et une fonction de transfert $(1+s^2T^{*2})$ avec une constante de temps T*, conformément à:

$$M^* = MA(1+s^2T^{*2})(1+(T1/T2)^*) -M2(T1/T2)^*.$$

6. Application du procédé suivant l'une des revendications 1 à 5 à la détermination du couple intérieur d'un moteur à combustion interne, l'allumage du moteur étant débranché ou le moteur fonctionnant au ralenti et la variation du moment électrique étant réalisée par l'addition d'une suite d'impulsions supplémentaires à la valeur de consigne de la vitesse de rotation ou à la valeur de consigne du couple du dispositif d'entraînement électrique.

7. Dispositif pour déterminer le couple intérieur d'un générateur de couple, comportant
   a) un générateur de couple (50),
   b) un dispositif d'entraînement électrique (56) servant à produire un moment électrique prédéterminé, et
   c) un accouplement de transmission du couple entre le dispositif d'entraînement et le générateur de couple avec un capteur de couple (55), caractérisé par
   d) une unité de calcul (65) qui calcule une valeur modèle pour le couple intérieur à partir du moment électrique, de la valeur de mesure fournie par le capteur et d'un paramètre de moments d'inertie,
   e) un dispositif d'entrée (63) servant à ajouter une valeur de consigne supplémentaire transitoire pour l'obtention de variations de brève durée du moment électrique, et
   f) des moyens d'ajustement (40, 44, 67), qui réduisent au minimum, par modification du paramètre des moments d'inertie, les variations de la valeur modèle provoquées par des variations du moment électrique.

Simulierender
Antrieb
$(T_2)$

Drehmomenterzeuger
(Prüfling)
$(T_1)$

M2

$M_2$

$MA$

M1

8

−

+

3∼
3∼

12

13

$M_2^*$ — 10

FIG 1

Antrieb 2

Prüfling 1

M2 — −

+

$\frac{1}{T2} \int \cdots dt$

n2

−

n1

+

$\frac{1}{T1} \int \cdots dt$

−

M1

$Cf \cdot \int \cdots dt$ — Kopplung 3

FIG 2

$(T_1/T_2)^* = T_1/T_2$

$(T_1/T_2)^*$

t

$t_0$

M2

$\Delta M2$

t

$M^*$

$t_0$

t

$M^* = M2$

## FIG 3

$T^*$    41

MA    $1+S^2 T^*$    44    $M^*$
42    +
+

M2    +    ×    45
−
43    40

$(T_1/T_2)^*$

## FIG 4

FIG 5